# EUROPÄISCHE PATENTSCHRIFT

(11) **EP 2 746 340 B1**
(45) Veröffentlichungstag und Bekanntmachung des Hinweises auf die Patenterteilung: **24.12.2014**
(21) Anmeldenummer: 12199085.7
(22) Anmeldetag: 21.12.2012
(51) Int. Cl.: C08L 77/00, C08L 77/06, G02B 1/04, G02B 6/02, G02B 6/44

(54) **Flammgeschützte Polyamid-Formmasse und deren Verwendung**
Flame-retardant polyamide moulding masses and their applications
Masse de formage en polyamide ignifuge et son utilisation

(43) Veröffentlichungstag der Anmeldung: 25.06.2014
(73) Patentinhaber: EMS-PATENT AG, 7013 Domat / Ems (CH)
(72) Erfinder: Dr.Bühler, Friedrich, Severin, 7430 Thusis (CH); Dipl.-Ing. Garcia, Gabriel, 7013 Domat/Ems (CH); Dr. Hoffmann, Botho, 7013 Domat/Ems (CH)
(74) Vertreter: OK pat AG

(56) Entgegenhaltungen:
- EP-A2- 1 376 156

## Beschreibung

Die Erfindung betrifft eine flammgeschützte Polyamid-Formmasse zur Ummantelung von Lichtwellenleitern und optischen Kabeln, sowie deren Verwendung.

Als Lichtleitfasern werden meist Glasfasern (glasoptische Fasern GOF) eingesetzt, mit denen sich grosse Datenmengen über grosse Entfernungen übertragen lassen. Zur Übertragung von Lichtsignalen über kurze Distanzen können auch Kunststoff-Lichtwellenleiter (polymeroptische Fasern POF) eingesetzt werden. Die Lichtleitfasern werden zur besseren Handhabung und zum Schutz direkt beim Faserhersteller gegebenenfalls mit einem Lack sowie in jedem Fall mit einer ersten Kunststoffschicht überzogen, der sogenannten Primärbeschichtung, auch Cladding genannt. Bei polymeroptischen Fasern besteht die Primärbeschichtung z.B. aus einem Fluorpolymer.

Die mit einer Primärbeschichtung versehene Lichtleitfaser wird in dieser Anmeldung als Lichtwellenleiter bezeichnet.

Bei der Aderherstellung erfolgt die Sekundärbeschichtung oder Ummantelung oder Umhüllung des Lichtwellenleiters mit Kunststoff. Generell wird für die Sekundärbeschichtung oder Ummantelung oder Umhüllung eines Lichtwellenleiters oder bei einem optischen Kabel im Folgenden bei der Erfindungsbeschreibung hauptsächlich der Begriff Ummantelung als Oberbegriff verwendet.

Die Art und Weise der Gestaltung solcher Ummantelungen bei Lichtwellenleitern bzw. optischen Kabeln ist dem Fachmann bekannt. Ein repräsentatives und anerkanntes Standardwerk dafür ist das "Kabelhandbuch Daetwyler" vom Oktober 2000 (Daetwyler Kabel+Systeme GmbH, D-85375 Neufahrn), das als UNILAN Handbuch bei der Fachhochschule Flensburg (Deutschland) direkt über Internet aufrufbar ist unter der Adresse:
http://www2.wi.fh-flensburg.de/wi/riggert/Netzwerke/Kabelhandbuch-Daetwyler.

Im Kapitel 4.6 des Kabelhandbuchs-Daetwyler wird der Aufbau von Glasfaserkabeln beschrieben. Gemäss Unterkapitel 4.6.2 über Adertypen wird die Einheit aus Lichtleitfaser, Primärbeschichtung und Sekundärbeschichtung als Ader bezeichnet, d.h. diese Einheit bildet eine optische Ader. Für die Sekundärbeschichtung bzw. Ummantelung gibt es gemäss diesem Unterkapitel grundsätzlich zwei Ausführungsformen, nämlich eine feste Umhüllung (Festader oder Vollader) oder eine lose Umhüllung (Hohlader), vgl. Bild 4.28. Werden in eine lose Hülle mehrere Lichtwellenleiter eingelegt, spricht man bei einer solchen Einheit von einer Bündelader, vgl. Bild 4.30. Eine Abstufung zwischen einer Vollader und einer Hohlader ist die Kompaktader gemäss Bild 4.32, bei welcher die Ummantelung nur einen kleinen Abstand von der Lichtleitfaser hat. Zwischenräume zwischen Lichtwellenleiter und Ummantelung werden mit einem Gel aufgefüllt.

Ein optisches Kabel wird gemäss den Unterkapiteln 4.6.3 und 4.6.4 erhalten, indem mehrere optische Adern zu einer Kabelseele verseilt werden, und ein geeigneter Mantel um die Kabelseele herum angebracht wird, vgl. Bild 4.34. Dieser alles umhüllende Mantel eines optischen Kabels wird im Sinne der vorliegenden Erfindung ebenfalls als Ummantelung verstanden.

In der DE 37 17 928 A1 werden transparente Copolyamide beschrieben, die zwingend Bis(4-amino-3-methyl-5-ethyl-cyclohexyl)methan enthalten. Auf deren Eignung für die Lichtwellenleiterummantelung wird hingewiesen. Als mögliche Zusatzstoffe sind unter anderem Flammschutzmittel erwähnt, ohne dass diese genauer spezifiziert werden.

Polyamid-Formmassen mit Aminoendgruppenüberschuss als haftende Schutzschicht von Lichtwellenleitern sind in der DE 10 2004 045 775 A1 beschrieben. Diese Polyamid-Formmassen sind stabilisiert und enthalten bevorzugt Flammschutzmittel.

Für Kunststoff-Lichtwellenleiter (POF) wird in der EP 1 376 156 A2 als Aussenschicht eine Polyamid-Formmasse vorgeschlagen. Diese enthält ein Polyamid ausgewählt aus der Gruppe PA 11, PA 12, PA 1012, PA 1212 oder ein hauptsächlich auf einem dieser Polyamide basierendes Copolyamid oder Polyetheramid, sowie Flammschutzmittel und optional einen Schlagzähmodifikator.

Bisherige Ummantelungen aus Polyamidmaterialien gemäss Stand der Technik konnten gewisse Anforderungen nicht optimal oder nicht gleichzeitig erfüllen. So wiesen gewisse Materialien keinen Flammschutz oder keinen halogenfreien Flammschutz auf, wie er vor allem für Innenanwendungen verlangt wird. Für Installationen im Innenbereich und im Automobilbau müssen die optischen Adern zudem gut biegbar sein ohne zu knicken. Für den Einsatz im Aussenbereich (Aussenanwendungen) sind robuste Ummantelungen erforderlich, welche die Lichtwellenleiter vor Witterungseinflüssen und vor Verbiss durch Nager schützen. Mit dem Sammelbegriff "Nager" sind hier nicht nur Nagetiere nach biologischer Ordnung gemeint, sondern nagende oder beissende Tiere jeglicher Art, z.B. Ratten, Hasentiere oder die zu den Raubtieren gehörenden Marder.

Aufgabe der vorliegenden Erfindung war es deshalb, eine Polyamid-Formmasse zur Verfügung zu stellen, welche für die Ummantelung von Lichtwellenleitern und optischen Kabeln geeignet ist, und welche die Anforderungen für die Verwendung bei optischen Adern und optischen Kabeln sowohl für Innenanwendungen als auch für Aussenanwendungen erfüllt.

Diese Aufgabe wird gemäss der vorliegenden Erfindung mit einer flammgeschützten Polyamid-Formmasse mit den Merkmalen von Anspruch 1 gelöst.

Bevorzugte Ausführungsformen dieser flammgeschützten Polyamid-Formmasse sowie Verwendungen derselben ergeben sich aus den abhängigen Ansprüchen.

Die erfindungsgemässe Polyamid-Formmasse zeichnet sich dadurch aus, dass sie universell für die Ummantelung aller vorne genannten Lichtwellenleiter, Adertypen und optischen Kabel geeignet ist.

Für jede einzelne dieser Ummantelungen gilt:
- Die Ummantelung kann dabei aus einer oder mehreren Schichten bestehen, wobei mindestens eine diese Schichten aus der erfindungsgemässen Formmasse besteht.
- Bevorzugt handelt es sich bei der mindestens einen Schicht nicht um die direkt an die Primärbeschichtung eines Lichtwellenleiters anschliessende Schicht der Ummantelung.
- Besonders bevorzugt bildet die mindestens eine Schicht mindestens eine der beiden Schichten ausgewählt aus der äussersten und/oder zweitäussersten Schicht der Ummantelung.
- Ganz besonders bevorzugt bildet die mindestens eine Schicht die äusserste Schicht der Ummantelung.

Die erfindungsgemässe Polyamid-Formmasse weist folgende Zusammensetzung und Merkmale auf:
(A) 40 bis 71 Gew.-% Copolyamid MACMI/12;
(B) 20 bis 51 Gew.-% mindestens eines aliphatischen Polyamids;
(C) 6 bis 20 Gew.-% Melamincyanurat;
(D) 3 bis 10 Gew.-% Aryl-Phosphat; und
(E) 0 bis 6 Gew.-% weitere Zusatzstoffen;
wobei sich die Komponenten (A) bis (E) auf 100 Gew.-% der Polyamid-Formmasse ergänzen. Das Copolyamid MACMI/12 weist einen Laurinlactamgehalt von 23 bis 45 Mol-% bezogen auf die molare Summe der Monomeren MACM, Isophthalsäure und Laurinlactam dieses Copolyamids auf, wobei die Isophthalsäure im Copolyamid MACMI/12 ganz oder teilweise durch Terephthalsäure ersetzt sein kann.

Als Mass für die bisshemmende Wirkung der Polyamid-Formmasse wird die Shore-Härte D verwendet, die dazu mindestens 77 (gemessen nach ISO 868) betragen muss.

Es wird ein Knicktest mit einem mit der Polyamid-Formmasse beschichteten PA 12-Extrudat bei Wicklung um einen Metallstab mit Durchmesser 12 mm bestanden, wobei das PA 12-Extrudat für diesen Knicktest einen Durchmesser von 1,5 mm hat und 0,7 mm dick mit der zu prüfenden Polyamid-Formmasse beschichtet ist, woraus sich ein Gesamtdurchmesser von 2,9 mm ergibt. Die Herstellung dieses speziellen, beschichteten Extrusions-Prüfkörpers ist weiter hinten im Abschnitt über die Herstellung der Prüfkörper beschrieben.

Aus der erfindungsgemässen Polyamid-Formmasse hergestellte Prüfkörper müssen im vertikalen Brandtest 50 W (20 mm) nach UL-94 der Underwriters Laboratories sowohl bei einer Dicke von 1,6 mm als auch bei einer Dicke von 0,8 mm bevorzugt zumindest die Einstufung V2 aufweisen.

Eine entsprechende, flammgeschützte Polyamid-Formmasse kann verwendet werden zur Herstellung einer Lichtwellenleiterummantelung oder einer Ummantelung eines optischen Kabels mittels eines Schlauchummantelungswerkzeugs. Im Weiteren betrifft die Verwendung auch einen derart ummantelten Lichtwellenleiter als optische Ader, und/oder die Verwendung eines derart ummantelten optischen Kabels, für Innenanwendungen und/oder Aussenanwendungen, wobei Ummantelungen aus dieser Polyamid-Formmasse gegenüber Nagern eine bisshemmende Wirkung aufweisen. Möglich ist es, nur für den aussen liegenden Mantel eines optischen Kabels eine erfindungsgemässe, flammgeschützte Polyamid-Formmasse zu verwenden.

Die Herstellung mehrschichtiger Ummantelungen kann entweder:
- in separaten Schritten auf die jeweils zuletzt hergestellte äußere Schicht erfolgen, oder
- in einer Extrusionslinie mit verschiedenen Extrudern nacheinander z. B. im sogenannten Tandemverfahren erfolgen, oder
- durch Coextrusion von mehr als einer Schutzhülle gleichzeitig erfolgen.

In einer bevorzugten, abhängigen Ausführungsform ist die flammgeschützte Polyamid-Formmasse zusammengesetzt aus:
(A) 45 bis 66 Gew.-% Copolyamid MACMI/12;
(B) 20 bis 46 Gew.-% mindestens eines aliphatischen Polyamids;
(C) 8 bis 15 Gew.-% Melamincyanurat;
(D) 3 bis 8 Gew.-% Aryl-Phosphat; und
(E) 0 bis 4 Gew.-% weiteren Zusatzstoffen;
wobei sich die Komponenten (A) bis (E) auf 100 Gew.-% der Polyamid-Formmasse ergänzen, und zudem die übrigen Bedingungen des unabhängigen Produktanspruchs gelten.

In einer besonders bevorzugten, abhängigen Ausführungsform ist die flammgeschützte Polyamid-Formmasse zusammengesetzt aus:
(A) 47 bis 63 Gew.-% Copolyamid MACMI/12;
(B) 20 bis 40 Gew.-% mindestens eines aliphatischen Polyamids;
(C) 10 bis 14 Gew.-% Melamincyanurat;
(D) 3 bis 6 Gew.-% Aryl-Phosphat; und
(E) 0.05 bis 4 Gew.-% weiteren Zusatzstoffen;
wobei sich die Komponenten (A) bis (E) auf 100 Gew.-% der Polyamid-Formmasse ergänzen, und zudem die übrigen Bedingungen des unabhängigen Produktanspruchs gelten.

Das Copolyamid MACMI/12 der flammgeschützten Polyamid-Formmasse weist bevorzugt einen Laurinlactam-Gehalt von 25 - 40 Mol-%, besonders bevorzugt von 30 - 40 Mol-% auf, bezogen auf die molare Summe der Monomeren MACM, Isophthalsäure und Laurinlactam dieses Copolyamids.

Die Glasübergangstemperatur des Copolyamids MACMI/12 liegt bevorzugt im Bereich von 140 - 185 °C, besonders bevorzugt im Bereich von 150 - 170 °C, und ganz besonders bevorzugt im Bereich von 155 - 165 °C.

Die relative Viskosität gemessen in m-Kresol des Copolyamids MACMI/12 liegt bevorzugt im Bereich von 1,40 bis 1,65, besonders bevorzugt im Bereich von 1,45 bis 1,60, ganz besonders bevorzugt im Bereich von 1,50 bis 1,60. Die Messmethode für die relative Viskosität (RV) ist im betreffenden Abschnitt weiter hinten beschrieben.

Bei der flammgeschützten Polyamid-Formmasse ist das mindestens eine aliphatische Polyamid der Komponente (B) bevorzugt linear-aliphatisch. Unter einem linear-aliphatischen Polyamid wird ein Polyamid verstanden, welches aus linear-aliphatischen Monomeren aufgebaut ist. Lactame werden hierbei ausdrücklich zu den linear-aliphatischen Monomeren gezählt. Zu den linear-aliphatischen Monomeren zählen weder verzweigte, noch cycloaliphatische, noch aromatische Monomere, noch aromatische Einheiten enthaltende Monomere.

Besonders bevorzugt ist das mindestens eine linear-aliphatische Polyamid ausgewählt aus der Gruppe bestehend aus PA 6, PA 11, PA 12, PA 66, PA 69, PA 610, PA 612, PA 614, PA 618, PA 1010, PA 1012, PA 1212, PA 6/66, PA 6/12, PA 6/66/12, Polyetheramiden, Polyetheresteramiden, Polyesteramiden, Copolyamiden davon und Mischungen davon. Ganz besonders bevorzugt ist das mindestens eine linear-aliphatische Polyamid ausgewählt aus der Gruppe bestehend aus PA 1010 und Mischungen von PA 1010 mit mindestens einem anderen linear-aliphatischen Polyamid.

Die relative Viskosität gemessen in m-Kresol des aliphatischen Polyamids liegt bevorzugt im Bereich von 1,40 bis 2,70, besonders bevorzugt im Bereich von 1,50 bis 2,15, ganz besonders bevorzugt im Bereich von 1,55 bis 1,95.

Das Melamincyanurat kann als Pulver oder in Form eines Masterbatches eingesetzt werden. Bei Verwendung eines Melamincyanurat-Masterbatches ist das Trägermaterial aus derselben Gruppe von Materialien wie die Komponente (B) ausgewählt.

Das Aryl-Phosphat der erfindungsgemässen, flammgeschützten Polyamid-Formmasse ist bevorzugt ausgewählt aus der Gruppe bestehend aus Trikresylphosphat, Triphenylphosphat, Diphenylkresylphosphat, Bis(methylphenyl)-phenylphosphat und Mischungen davon.

Die weiteren Zusatzstoffe sind vorzugsweise ausgewählt aus der Gruppe bestehend aus anorganischen Stabilisatoren, organischen Stabilisatoren, Gleitmitteln, Polytetrafluorethylen, Farbstoffen, Markierungsstoffen, anorganischen Pigmenten, organischen Pigmenten, IR-Absorbern, Antistatika, Antiblockmitteln, Nukleierungsmitteln, Kristallisationsbeschleunigern, Kristallisationsverzögerern, Leitfähigkeitsadditiven, Russ, Graphit, Kohlenstoffnanoröhrchen, Entformungsmitteln, Trennmitteln, optischen Aufhellern, photochromen Additiven, Weichmachern, Haftvermittlern, Anti-Dripping-Mitteln, metallischen Pigmenten, Metallflittern, metallbeschichteten Partikeln und Mischungen davon.

Als Stabilisatoren bzw. Alterungsschutzmittel können zum Beispiel Antioxidantien, Antiozonantien, Lichtschutzmittel, UV-Stabilisatoren, UV-Absorber oder UV-Blocker eingesetzt werden.

Solche Zusatzstoffe können auch in den anderen Kunststoffschichten enthalten sein.

Ein aus der erfindungsgemässen Polyamid-Formmasse hergestellter Prüfkörper weist besonders bevorzugt eine Shore-Härte D im Bereich von 80 - 98, ganz besonders bevorzugt im Bereich von 80 - 95 auf. Eine hohe Shore-Härte D von mindestens 77 ist erforderlich für eine bisshemmende Wirkung gegenüber Nagern.

Zu den Anforderungen zählt wie schon erwähnt auch das Erreichen von bevorzugt zumindest der Einstufung V2 im vertikalen Brandtest 50 W (20 mm) nach UL-94 bei Prüfkörperdicken von 1,6 und 0,8 mm.

Der Knicktest mit einem mit der erfindungsgemässen Polyamid-Formmasse beschichteten PA 12-Extrudat wird besonders bevorzugt auch bei einem Metallstabdurchmesser von 10 mm, ganz besonders bevorzugt sogar bei einem Metallstabdurchmesser von 8 mm bestanden, also auch bei sehr enger Biegung.

Auf jeden Fall muss der Knicktest im Bereich von kleiner als 14 mm Metallstabdurchmesser bestanden werden, um die erfindungsgemässe Anforderung zu erfüllen.

Die Ummantelung oder Sekundärbeschichtung oder Umhüllung kann bevorzugt aus 1 bis 5 oder aus 1 bis 4, besonders bevorzugt aus 1 bis 3, ganz besonders bevorzugt aus 1 bis 2 Schichten aufgebaut sein.

Die Schichtdicke der mindestens einen Schicht aus der erfindungsgemässen Polyamid-Formmasse beträgt bevorzugt 0,5 mm bis 1,5 mm, besonders bevorzugt 0,7 mm bis 1,5 mm, ganz besonders bevorzugt 0,7 mm bis 1,2 mm.

Die Schichtdicke der weiteren Ummantelungsschichten beträgt bevorzugt 0,2 mm bis 1,5 mm, besonders bevorzugt 0,3 mm bis 1,2 mm, ganz besonders bevorzugt 0,4 mm bis 1,0 mm, insbesondere speziell bevorzugt 0,45 mm bis 0,9 mm.

Sofern Haftung zwischen einzelnen Schichten der Ummantelung gewünscht wird, wird in dieser weiteren Ausführungsform zwischen den betreffenden Schichten eine Haftvermittlerschicht verwendet. Die Schichtdicke solcher Haftvermittlerschichten beträgt bevorzugt 0,05 mm bis 1,2 mm, besonders bevorzugt 0,2 mm bis 0,9 mm, ganz besonders bevorzugt 0,3 mm bis 0,7 mm.

Mindestens eine der Ummantelungsschichten besteht aus der erfindungsgemässen Polyamid-Formmasse. Die restlichen Schichten können aus Polyolefinen, funktionalisierten oder modifizierten Polyolefinen, funktionalisierten Polyolefinen, Polyamiden, Polyethylenen, Polyethylencopolymeren, Polypropylen, Polypropylencopolymeren, Ethylen-Tetrafluorethylen-Copolymeren, Ethylen-Vinylacetat-Copolymeren, Ethylen-Vinylalkohol-Copolymeren, Fluorpolymeren, Polytetrafluorethylen, Ethylen-Propylen-Copolymeren, Polyvinylchlorid, Polyvinylidenchlorid, Polyester, Polyethylenterephthalat, Polybutylenterephthalat, Polyurethanen, Polyoxymethylenen, vernetzten Polymeren oder deren Mischungen gebildet werden.

Als Haftvermittler werden bevorzugt Polyolefine und/oder Polyolefincopolymere verwendet, die mit Acrylsäure, Bernsteinsäureanhydrid, Glycidylmethacrylat und/oder Maleinsäureanhydrid funktionalisiert, d.h. gepfropft und/oder copolymerisiert sind. Beispiele hierfür sind funktionalisiertes Polyethylen mit mittlerer, niedriger oder sehr niedriger Dichte, funktionalisiertes linear low density Polyethylen, funktionalisiertes Polypropylen, funktionalisierte Copolymere aus Ethylen und linearen, verzweigten oder cyclischen Alkenen, z.B. funktionalisierte Ethylen-Propylen-Copolymere.

### Herstellung der erfindungsgemässen Polyamid-Formmasse:

Die nachfolgende Beschreibung der Herstellung dient zur Illustration, soll aber den Erfindungsumfang nicht einschränken.

Zur Herstellung der Polyamid-Formmasse werden die Komponenten auf üblichen Compoundiermaschinen, wie z.B. ein- oder zweiwelligen Extrudern oder Schneckenknetern gemischt. Die Komponenten werden dabei einzelnen in den Einzug dosiert oder in Form eines Dryblends zugeführt.

Zur Dryblendherstellung werden die getrockneten Granulate und gegebenenfalls weitere Additive (Zusatzstoffe) vermischt. Diese Mischung wird mittels eines Taumelmischers, Rhönradmischers oder Taumeltrockners 10 - 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 230 °C bis 290 °C. Vor der Düse kann Vakuum angelegt oder atmosphärisch entgast werden. Die Schmelze wird in Strangform ausgetragen, im Wasserbad bei 10 bis 80 °C abgekühlt und anschliessend granuliert. Das Granulat wird für 12 - 24 Stunden bei 80 bis 120 °C unter Stickstoff oder im Vakuum auf einen Wassergehalt von unter 0.1 Gew.-% getrocknet.

Ergänzend soll noch bemerkt werden, dass der Begriff "Polyamid" ein Oberbegriff ist, der sowohl Homopolyamide als auch Copolyamide sowie Mischungen und Blends von Homopolyamiden und/oder Copolyamiden umfasst. Die abgekürzten Polyamid-Schreibweisen richten sich nach der Norm ISO 1874-1:1992(E).

Die vorliegende Erfindung wird anhand der nachfolgenden Beispiele, welche die Erfindung illustrieren, nicht aber den Erfindungsumfang einschränken sollen, näher dargestellt.

Die in der nachfolgenden Tabelle 1 aufgeführten Materialien wurden in den Beispielen und Vergleichsbeispielen eingesetzt.

**Tabelle 1: eingesetzte Materialien**

| **Komponenten** | **Beschreibung** | **Handelsname** | **Hersteller** |
|---|---|---|---|
| (A1) | Copolyamid MACMI/12 aus 3,3'-Dimethyl-4,4'-diaminocyclohexylmethan (32,7 Mol-%), Isophthalsäure (32,7 Mol-%) und Laurinlactam (34,6 Mol-%). RV 1,55 (gemessen an einer Lösung aus 0,5 g CoPA in 100 ml m-Kresol bei 20 °C). | - | EMS-CHEMIE AG, Schweiz |
| | Glasübergangstemperatur 160 °C | | |
| (A2) | Copolyamid MACMI/12 aus 3,3'-Dimethyl-4,4'-diaminocyclohexylmethan (40,5 Mol-%), Isophthalsäure (40,5 Mol-%) und Laurinlactam (19 Mol-%). RV 1,45 (gemessen an einer Lösung aus 0,5 g CoPA in 100 ml m-Kresol bei 20 °C). | - | EMS-CHEMIE AG, Schweiz |
| | Glasübergangstemperatur 200 °C | | |
| (B1) | Polyamid 1010 aus Decan-1,10-diamin und Octan-1,8-dicarbonsäure. RV 1,73 (gemessen an einer Lösung aus 0,5 g PA in 100 ml m-Kresol bei 20 °C). | - | EMS-CHEMIE AG, Schweiz |
| | Schmelzpunkt 200 °C | | |
| (C) + (B2) | Masterbatch aus Melamincyanurat und Polyamid 12 im Gewichtsverhältnis 60 : 40, d.h. 60% (C) und 40% (B2), (B2) = PA 12 | Luvogard MB 60 / PA 12 | Lehmann & Voss & Co., Deutschland |
| (D) | Reaktionsmasse aus Phenol und p/m-Kresylphosphat mit Diphenylkresylphosphat als Hauptkomponenten. | Disflamoll DPK | Lanxess, Deutschland |
| | Zusammensetzung in Gew.-%: | | |
| | Diphenylkresylphosphat 42 - 47 | | |
| | Bis(methylphenyl)-Phenylphosphat 24 - 26 | | |
| | Triphenylphosphat 23 - 26 | | |
| | Trikresylphosphat (m-m-m, m-m-p, m-p-p, p-p-p) 4 - 6 | | |
| | Dichte 1,205 - 1,215 g/ml bei 20 °C | | |
| | Siedepunkt > 224 °C bei 5 mbar | | |
| (E1) Hitzestabilisator | Ethylenbis(oxyethylen)bis[3-(5-tert butyl-4-hydroxy-m-tolyl)propionat] | Irganox 245 | BASF, Deutschland |
| | CAS-Nr. 36443-68-2 | | |
| (E2) UV-Stabilisator | Phenol, 2-(2H-benzotriazol-2-yl)-4,6-bis(1-methyl-1-1phenylethyl) | Tinuvin 234 | BASF, Deutschland |
| | CAS-Nr. 70321-86-7 | | |

Die Messungen wurden nach folgenden Testmethoden durchgeführt:
Shore-Härte D:
   ISO 868
   ISO-Zugstab als Prüfkörper
   Norm: ISO/CD 3167, Typ A1, 170 x 20/10 x 4 mm
   Temperatur 23 °C
   Gemessen wird am breiten Teil des Zugstabes.
   Bemerkung: Shore A- und Shore D-Werte können aufgrund der verschiedenen Eindringkörper nicht miteinander korreliert werden.
Knicktest:
   Zur Prüfung der Knickbeständigkeit einer Ummantelung wird zunächst ein PA12-Extrudat, das als stützender Kern dient und einen Durchmesser von 1,5 mm hat, mit der zu prüfenden Polyamid-Formmasse 0,7 mm dick beschichtet, so dass der Gesamtdurchmesser 2,9 mm beträgt. Die Herstellung dieses speziellen, beschichteten Extrusions-Prüfkörpers wird nachfolgend im Abschnitt über die Herstellung der Prüfkörper beschrieben. Dieser Verbund wird dann um einen Metallstab gewickelt, und zwar werden 5 Wicklungen ausgeführt. Dabei darf es weder zu Knickstellen noch Weissbruch kommen, damit der Knicktest beim betreffenden Metallstabdurchmesser als bestanden gilt. Für den Test stehen Metallstäbe zur Verfügung, die im Durchmesser millimeterweise abgestuft sind. Von Interesse für die Prüfung ist der Bereich von 18 mm Durchmesser bis hinunter auf die sehr enge Biegung bei 8 mm Durchmesser.
Vertikaler Brandtest 50 W (20 mm)
   UL-94 Underwriters Laboratories
   Prüfstab 125 x 13 x 0,8 mm
   Prüfstab 125 x 13 x 1,6 mm
Relative Viskosität (RV):
   ISO 307
   0,5 g Polyamid (PA) bzw. Copolyamid (CoPA) in 100 ml m-Kresol gelöst Messung bei Temperatur 20 °C
   Berechnung der relativen Viskosität (RV) nach RV = t/t₀ in Anlehnung an Abschnitt 11 der Norm.
Schmelzpunkt und Glasübergangstemperatur (Tg):
   ISO-Norm 11357
   Granulat
   Die Differential Scanning Calorimetry (DSC) wurde mit einer Aufheizrate von 20 K/min durchgeführt. Beim Schmelzpunkt wird die Temperatur am Peakmaximum angegeben. Der Mittelpunkt des Glasübergangsbereichs, welcher als Tg angegeben wird, wurde nach der Methode "Half height" ermittelt.

### Herstellung der Prüfkörper:

Die Prüfkörper für Shore D und für den Brandtest wurden auf einer Spritzgussmaschine der Firma Arburg, Modell Allrounder 420 C 1000-250 hergestellt. Dabei wurden Zylindertemperaturen zwischen 230 und 290 °C verwendet. Die Formtemperatur betrug 80 °C.

Die Prüfkörper für die Shore D Messung wurden im konditionierten Zustand verwendet, dazu wurden sie nach dem Spritzguss nach ISO 1110 für 14 Tage bei 72 °C und 62 % relativer Feuchte gelagert.

Spezieller, beschichteter Extrusions-Prüfkörper für den Knicktest:

Die Herstellung des PA 12-Extrudates erfolgte auf einer Nokia-Ummantelungsanlage, bei der der Düsenkern durch einen Blindkern ersetzt wurde, um einen Strang mit 1,5 mm Durchmesser extrudieren zu können. Dazu wurde ein PA 12 mit einer relativen Viskosität von 2,20 - 2,30 (gemessen in m-Kresol) verwendet. Die Zylindertemperaturen des Extruders waren auf 240 bis 250 °C eingestellt. Die Abzugsgeschwindigkeit betrug 20 m/min. Das Extrudat wurde in zwei aufeinanderfolgenden Wasserbädern abgekühlt. Die Temperatur des ersten Wasserbades betrug dabei 60 °C und die des zweiten 40 °C.

Das PA 12-Extrudat mit 1,5 mm Durchmesser wurde anschliessend auf der Nokia-Ummantelungsanlage jeweils mit den Polyamid-Formmassen der nachfolgenden Beispiele 1 und 2 und der Vergleichsbeispiele 3 bis 6 mit einer Schicht, deren Dicke 0,7 mm betrug, ummantelt. Die Extruderzonen wurden dabei auf 240 bis 270 °C eingestellt, im Kopf wurde ein Vakuum von 0,5 bar verwendet, und die Abzugsgeschwindigkeit betrug 30 m/min. Die Abkühlung erfolgte nacheinander in zwei Wasserbädern. Die Temperatur des ersten Wasserbades betrug dabei 60 °C und die des zweiten 40 °C.

### Versuche:

Für die Versuche wurden aus den in Tabelle 1 aufgeführten Rohstoffen bzw. Komponenten Polyamid-Formmassen compoundiert, und zwar mit den in der nachfolgenden Tabelle 2 bei den Beispielen und Vergleichsbeispielen angegebenen Komponenten und deren Mengenanteilen in Gewichtsprozent (Gew.-%). Die Summe der eingesetzten Komponenten betrug jeweils 100 Gew.-%. Der Mengenanteil des Melamincyanurat-Masterbatches teilt sich jeweils auf in einen Anteil von reinem Melamincyanurat (C) und in einen Anteil des Trägerpolymers Polyamid 12, das ein linear-aliphatisches Polyamid (B2) ist. Der totale Anteil des mindestens einen aliphatischen Polyamids (B) berechnet sich somit bei den Beispielen und Vergleichsbeispielen aus der Summe von (B1) und (B2).

Die Zusammensetzungen der Polyamid-Formmassen der Beispiele und Vergleichsbeispiele sowie die Resultate der Shore D Messung und des Knicktests sind in Tabelle 2 zusammengefasst.

**Tabelle 2: Beispiele und Vergleichsbeispiele, Zusammensetzungen und Testresultate**

| | **Einheiten** | **Beispiele** | | **Vergleichsbeispiele** | | | |
|---|---|---|---|---|---|---|---|
| **Zusammensetzung** | | **1** | **2** | **3** | **4** | **5** | **6** |
| (A1) | Gew.-% | 50 | 60 | - | - | 50 | 60 |
| (A2) | Gew.-% | - | - | 50 | - | - | - |
| (B1) | Gew.-% | 25 | 15 | 25 | 75 | 29 | 19 |
| (C) + (B2) | Gew.-% | 20 | 20 | 20 | 20 | 20 | 20 |
| *d.h. (C)* | *Gew.-%* | *12* | *12* | *12* | *12* | *12* | *12* |
| *(B2)* | *Gew.-%* | *8* | *8* | *8* | *8* | *8* | *8* |
| (D) | Gew.-% | 4 | 4 | 4 | 4 | - | - |
| (E1) | Gew.-% | 0.5 | 0.5 | 0.5 | 0.5 | 0.5 | 0.5 |
| (E2) | Gew.-% | 0.5 | 0.5 | 0.5 | 0.5 | 0.5 | 0.5 |

| **Testresultate** | | | | | | | |
|---|---|---|---|---|---|---|---|
| Shore D | - | 81 | 81 | nb | 72 | 79 | 81 |
| Knicktest | 18 mm | + | + | ● | + | + | + |
| [Metallstabdurchmesser] | 14 mm | + | + | ● | + | + | ● |
| + bestanden | 12 mm | + | + | ● | + | ● | ● |
| ● nicht bestanden | 8 mm | + | + | ● | + | ● | ● |

| | | | | | | | |
|---|---|---|---|---|---|---|---|
| nb = nicht bestimmt | | | | | | | |

Die Tabelle 2 zeigt auf, wie schwierig es ist, für eine Lichtwellenleiter-Ummantelung die beiden Anforderungen von hoher Shore-Härte D einerseits und hoher Biegsamkeit bzw. Knickbeständigkeit andererseits gleichzeitig zu erfüllen. Schon kleine Abweichungen von den in erfinderischer Arbeit ermittelten Bedingungen des unabhängigen Produktanspruchs führen dazu, dass die eine oder die andere Anforderung nicht mehr erfüllt wird. Drastisch wird einem dies mit dem Vergleichsbeispiel 3 vor Augen geführt, wo im Vergleich zum Erfindungsbeispiel 1 lediglich der Laurinlactamgehalt im Copolyamid MACMI/12 mit 19 Mol-% (vgl. Komponente A2 in Tabelle 1) niedriger und ausserhalb der Spezifikation von 23-45 Mol-% war. Dadurch wurde der Knicktest selbst beim grössten überprüften Durchmesser nicht bestanden, und die Shore-Härte D wurde deshalb gar nicht mehr gemessen. Ohne ein Copolyamid MACMI/12 (vgl. Komponente (A)) ergibt die Polyamid-Formmasse hingegen nicht die notwendige hohe Shore-Härte D, wie Vergleichsbeispiel 4 zeigt. Ohne die Komponente (D) wiederum wird zwar die erforderliche hohe Shore-Härte D erreicht, aber die Knickbeständigkeit ist ungenügend, wie die Vergleichsbeispiele 5 und 6 zeigen.

Zusammensetzungen gemäss den erfindungsgemässen Beispielen 1 und 2 mit der überraschenden Eigenschaftskombination zu finden war deshalb für einen Fachmann alles andere als naheliegend. Es war auch unerwartet, dass der Flammschutz durch eine ausgewogene Kombination von zwei verschiedenen Flammschutzmitteln (C) und (D) bewerkstelligt werden musste, um die anderen beiden Eigenschaften nicht zu verschlechtern. Die erfindungsgemässen Polyamid-Formmassen ergaben im vertikalen Brandtest 50 W (20 mm) nach UL-94 der Underwriters Laboratories die Einstufung V2, und das sowohl bei 1.6 mm als auch bei 0.8 mm Dicke der getesteten Prüfstäbe. Die Polyamid-Formmassen der Vergleichsversuche erzielten dabei ebenfalls die Einstufung V2.

Damit kann mit dieser Erfindung eine vorteilhafte Polyamid-Formmasse zur Verfügung gestellt werden, welche verglichen mit den bisher für die Ummantelung von Lichtwellenleitern und optischen Kabeln verwendeten Polyamidformmassen vielseitiger einsetzbar ist, und in überraschender Weise gleichzeitig sowohl für den Innenbereich als auch für den Ausseneinsatz die Anforderungen für die Verwendung als Ummantelung bei optischen Adern und optischen Kabeln erfüllt.

## Patentansprüche

1. Flammgeschützte Polyamid-Formmasse zur Ummantelung von Lichtwellenleitern und optischen Kabeln, **dadurch gekennzeichnet, dass** diese Polyamid-Formmasse zusammengesetzt ist aus:
(A) 40 bis 71 Gew.-% Copolyamid MACMI/12;
(B) 20 bis 51 Gew.-% mindestens eines aliphatischen Polyamids;
(C) 6 bis 20 Gew.-% Melamincyanurat;
(D) 3 bis 10 Gew.-% Aryl-Phosphat; und
(E) 0 bis 6 Gew.-% weiteren Zusatzstoffen;
wobei sich die Komponenten (A) bis (E) auf 100 Gew.-% der Polyamid-Formmasse ergänzen,
wobei das Copolyamid MACMI/12 einen Laurinlactam-Gehalt von 23 bis 45 Mol-% bezogen auf die molare Summe der Monomeren MACM, Isophthalsäure und Laurinlactam dieses Copolyamids aufweist, und
wobei die Isophthalsäure im Copolyamid MACMI/12 ganz oder teilweise durch Terephthalsäure ersetzt sein kann.

2. Flammgeschützte Polyamid-Formmasse gemäss Anspruch 1, **dadurch gekennzeichnet, dass** diese Polyamid-Formmasse zusammengesetzt ist aus:
(A) 45 bis 66 Gew.-% Copolyamid MACMI/12;
(B) 20 bis 46 Gew.-% mindestens eines aliphatischen Polyamids;
(C) 8 bis 15 Gew.-% Melamincyanurat;
(D) 3 bis 8 Gew.-% Aryl-Phosphat; und
(E) 0 bis 4 Gew.-% weiteren Zusatzstoffen;
wobei sich die Komponenten (A) bis (E) auf 100 Gew.-% der Polyamid-Formmasse ergänzen.

3. Flammgeschützte Polyamid-Formmasse gemäss einem der vorhergehenden Ansprüche, **dadurch gekennzeichnet, dass** das Copolyamid MACMI/12 einen Laurinlactam-Gehalt von 25 - 40 Mol-%, bevorzugt von 30 - 40 Mol-% aufweist, bezogen auf die molare Summe der Monomeren MACM, Isophthalsäure und Laurinlactam dieses Copolyamids.

4. Flammgeschützte Polyamid-Formmasse gemäss einem der vorhergehenden Ansprüche, **dadurch gekennzeichnet, dass** das Copolyamid MACMI/12 eine Glasübergangstemperatur von 140 - 185 °C, bevorzugt von 150 - 170 °C, besonders bevorzugt von 155 - 165 °C aufweist, gemessen nach der ISO-Norm 11357 an Granulat mittels Differential Scanning Calorimetry bei einer Aufheizrate von 20 K/min, wobei als Glasübergangstemperatur der nach der Methode "Half height" ermittelte Mittelpunkt des Glasübergangsbereichs angegeben wird.

5. Flammgeschützte Polyamid-Formmasse gemäss einem der vorhergehenden Ansprüche, **dadurch gekennzeichnet, dass** das mindestens eine aliphatische Polyamid der Komponente (B) aus linear-aliphatischen Monomeren aufgebaut ist, zu denen auch Lactame gezählt werden.

6. Flammgeschützte Polyamid-Formmasse gemäss Anspruch 5, **dadurch gekennzeichnet, dass** das mindestens eine linear-aliphatische Polyamid ausgewählt ist aus der Gruppe bestehend aus PA 6, PA 11, PA 12, PA 66, PA 69, PA 610, PA 612, PA 614, PA 618, PA 1010, PA 1012, PA 1212, PA 6/66, PA 6/12, PA 6/66/12, Polyetheramiden, Polyetheresteramiden, Polyesteramiden, Copolyamiden davon und Mischungen davon.

7. Flammgeschützte Polyamid-Formmasse gemäss Anspruch 5, **dadurch gekennzeichnet, dass** das mindestens eine linear-aliphatische Polyamid ausgewählt ist aus der Gruppe bestehend aus PA 1010 und Mischungen von PA 1010 mit mindestens einem anderen linear-aliphatischen Polyamid.

8. Flammgeschützte Polyamid-Formmasse gemäss einem der vorhergehenden Ansprüche, **dadurch gekennzeichnet, dass** das Aryl-Phosphat ausgewählt ist aus der Gruppe bestehend aus Trikresylphosphat, Triphenylphosphat, Diphenylkresylphosphat, Bis(methylphenyl)-phenylphosphat und Mischungen davon.

9. Flammgeschützte Polyamid-Formmasse gemäss einem der vorhergehenden Ansprüche, **dadurch gekennzeichnet, dass** die weiteren Zusatzstoffe ausgewählt sind aus der Gruppe bestehend aus anorganischen Stabilisatoren, organischen Stabilisatoren, Gleitmitteln, Polytetrafluorethylen, Farbstoffen, Markierungsstoffen, anorganischen Pigmenten, organischen Pigmenten, IR-Absorbern, Antistatika, Antiblockmitteln, Nukleierungsmitteln, Kristallisationsbeschleunigern, Kristallisationsverzögerern, Leitfähigkeitsadditiven, Russ, Graphit, Kohlenstoffnanoröhrchen, Entformungsmitteln, Trennmitteln, optischen Aufhellern, photochromen Additiven, Weichmachern, Haftvermittlern, Anti-Dripping-Mitteln, metallischen Pigmenten, Metallflittern, metallbeschichteten Partikeln und Mischungen davon.

10. Verwendung einer flammgeschützten Polyamid-Formmasse gemäss Anspruch 1, die zusammengesetzt ist aus:
(A) 40 bis 71 Gew.-% Copolyamid MACMI/12;
(B) 20 bis 51 Gew.-% mindestens eines aliphatischen Polyamids;
(C) 6 bis 20 Gew.-% Melamincyanurat;
(D) 3 bis 10 Gew.-% Aryl-Phosphat; und
(E) 0 bis 6 Gew.-% weiteren Zusatzstoffen;
wobei sich die Komponenten (A) bis (E) auf 100 Gew.-% der Polyamid-Formmasse ergänzen,
wobei das Copolyamid MACMI/12 einen Laurinlactamgehalt von 23 bis 45 Mol-% bezogen auf die molare Summe der Monomeren MACM, Isophthalsäure und Laurinlactam dieses Copolyamids aufweist,
wobei die Isophthalsäure im Copolyamid MACMI/12 ganz oder teilweise durch Terephthalsäure ersetzt sein kann, und
wobei ein aus dieser Polyamid-Formmasse hergestellter Prüfkörper eine Shore-Härte D von mindestens 77 aufweist, und ein Knicktest mit einem mit dieser Formmasse beschichteten PA 12-Extrudat bei Wicklung um einen Metallstab mit Durchmesser 12 mm bestanden wird, wobei das PA 12-Extrudat für diesen Knicktest einen Durchmesser von 1,5 mm hat und 0,7 mm dick beschichtet ist,
wobei die Shore-Härte D und der Knicktest nach den in den Beispielen beschriebenen Testmethoden gemessen werden,
zur Herstellung einer Lichtwellenleiterummantelung oder einer Ummantelung eines optischen Kabels mittels eines Schlauchummantelungswerkzeugs.

## Claims

1. A flame-retardant polyamide molding material for the sheathing of optical waveguides and optical cables, **characterized in that** this polyamide molding material is composed of:
(A) 40 to 71 wt.-% co-polyamide MACMI/12;
(B) 20 to 51 wt.-% of at least one aliphatic polyamide;
(C) 6 to 20 wt.-% melamine cyanurate;
(D) 3 to 10 wt.-% aryl phosphate; and
(E) 0 to 6 wt.-% further additives;
wherein the components (A) to (E) add up to 100 wt.-% of the polyamide molding material,
wherein the co-polyamide MACMI/12 has a laurin lactam content of 23 to 45 mol-% in relation to the molar total of the monomers MACM, isophthalic acid, and laurin lactam of this co-polyamide, and
wherein the isophthalic acid in the co-polyamide MACMI/12 can be entirely or partially replaced by terephthalic acid.

2. The flame-retardant polyamide molding material according to Claim 1, **characterized in that** this polyamide molding material is composed of:
(A) 45 to 66 wt.-% co-polyamide MACMI/12;
(B) 20 to 46 wt.-% of at least one aliphatic polyamide;
(C) 8 to 15 wt.-% melantine cyanurate;
(D) 3 to 8 wt.-% aryl phosphate; and
(E) 0 to 4 wt.-% further additives;
wherein the components (A) to (E) add up to 100 wt.-% of the polyamide molding material.

3. The flame-retardant polyamide molding material according to one of the preceding claims, **characterized in that** the co-polyamide MACMI/12 has a laurin lactam content of 25 - 40 mol-%, preferably 30 - 40 mol-%, in relation to the molar total of the monomers MACM, isophthalic acid, and laurin lactam of this co-polyamide.

4. The flame-retardant polyamide molding material according to one of the preceding claims, **characterized in that** the co-polyamide MACMI/12 has a glass transition temperature of 140 - 185°C, preferably 150 - 170°C, particularly preferably 155 - 165°C, measured according to ISO standard 11357 on granulate by means of differential scanning calorimetry at a heating rate of 20 K/minute, wherein the center point of the glass transition range ascertained according to the method "half height" is specified as the glass transition temperature.

5. The flame-retardant polyamide molding material according to one of the preceding claims, **characterized in that** the at least one aliphatic polyamide of the component (B) is synthesized from linear-aliphatic monomers, which also include lactams.

6. The flame-retardant polyamide molding material according to Claim 5, **characterized in that** the at least one linear-aliphatic polyamide is selected from the group consisting of PA 6, PA 11, PA 12, PA 66, PA 69, PA 610, PA 612, PA 614, PA 618, PA 1010, PA 1012, PA 1212, PA 6/66, PA 6/12, PA 6/66/12, polyether amides, polyetherester amides, polyester amides, co-polyamides thereof, and mixtures thereof.

7. The flame-retardant polyamide molding material according to Claim 5, **characterized in that** the at least one linear-aliphatic polyamide is selected from the group consisting of PA 1010 and mixtures of PA 1010 with at least one other linear-aliphatic polyamide.

8. The flame-retardant polyamide molding material according to one of the preceding claims, **characterized in that** the aryl phosphate is selected from the group consisting of trieresyl phosphate, triphenyl phosphate, diphenyl cresyl phosphate, bis(methylphenyl) phenyl phosphate, and mixtures thereof.

9. The flame-retardant polyamide molding material according to one of the preceding claims, **characterized in that** the further additives are selected from the group consisting of inorganic stabilizers, organic stabilizers, lubricants, polytetrafluoroethylene, colorants, marking materials, inorganic pigments, organic pigments, IR absorbers, antistatic agents, antiblocking agents, nucleating agents, crystallization accelerators, crystallization retarding agents, conductivity additives, carbon black, graphite, carbon nanotubes, demolding agents, separating agents, optical brighteners, photochromic additives, softeners, adhesion promoters, anti-dripping agents, metallic pigments, metal glitters, metal-coated particles, and mixtures thereof.

10. A use of a flame-retardant polyamide molding material according to Claim 1, which is composed of:
(A) 40 to 71 wt.-% copolyamide MACMI/12;
(B) 20 to 51 wt.-% of at least one aliphatic polyamide;
(C) 6 to 20 wt.-% melamine cyanurate;
(D) 3 to 10 wt.-% aryl phosphate; and
(E) 0 to 6 wt.-% further additives;
wherein the components (A) to (E) add up to 100 wt.-% of the polyamide molding material,
wherein the copolyamide MACMI/12 has a laurin lactam content of 23 to 45 mol-% in relation to the molar sum of the monomers MACM, isophthalic acid, and laurin lactam of this copolyamide, and
wherein the isophthalic acid in the copolyamide MACMI/12 can be entirely or partially replaced by terephthalic acid, and
wherein a test specimen produced from this polyamide molding material has a Shore hardness D of at least 77, and a buckling test using a PA 12 extrudate coated with this molding material is passed upon winding around a metal rod having 12 mm diameter, wherein the PA 12 extrudate for this buckling test has a diameter of 1.5 mm and is coated 0.7 mm thick,
wherein the shore hardness D and the buckling test are measured according to the test methods described in the examples,
for producing an optical waveguide sheath or a sheath of an optical cable by means of a tubing sheath tool.

## Revendications

1. Masse de formage en polyamide ignifuge pour enrober des conducteurs à fibres optiques et des câbles optiques, **caractérisée en ce que** cette masse de formage en polyamide est composée de :
(A) 40 à 71 % en poids de copolyamide MACMI/12 ;
(B) 20 à 51 % en poids d'au moins un polyamide aliphatique ;
(C) 6 à 20 % en poids de mélamine cyanurate ;
(D) 3 à 10 % en poids d'arylphosphate ; et
(E) 0 à 6 % en poids d'autres adjuvants,
les composants (A) à (E) complétant à 100 % en poids la masse de formage en polyamide,
le copolyamide MACMI/12 présentant une teneur en laurinlactame de 23 à 45 % en mois par rapport à la somme molaire des monomères MACM, de l'acide isophtalique et du laurinlactame de ce copolyamide, et
l'acide isophtalique dans le copolyamide MACMI/12 pouvant être remplacé en tout ou partie par de l'acide téréphtalique.

2. Masse de formage en polyamide ignifuge selon la revendication 1, **caractérisée en ce que** cette masse de formage en polyamide est composée de :
(A) 45 à 66 % en poids de copolyamide MACMI/12 ;
(B) 20 à 46 % en poids d'au moins un polyamide aliphatique ;
(C) 8 à 15 % en poids de mélamine cyanurate ;
(D) 3 à 8 % en poids d'arylphosphate ; et
(E) 0 à 4 % en poids d'autres adjuvants,
les composants (A) à (E) complétant à 100 % en poids la masse de formage en polyamide.

3. Masse de formage en polyamide ignifuge selon l'une des revendications précédentes, **caractérisée en ce que** le copolyamide MACMI/12 présente une teneur en laurinlactame de 25 à 40 % en mols, de préférence de 30 à 40 % en mols, par rapport à la somme molaire des monomères MACM, de l'acide isophtalique et du laurinlactame de ce copolyamide.

4. Masse de formage en polyamide ignifuge selon l'une des revendications précédentes, **caractérisée en ce que** le copolyamide MACMI/12 présente une température de transition vitreuse de 140 à 185°C, de préférence de 150 à 170°C, de façon particulièrement préférée de 155 à 165°C, mesurée suivant la norme ISO 11357 sur le granulat par analyse calorimétrique différentielle (*Diffential Scanning Calorimetry*) à une vitesse de montée en température de 20 K/min, le centre calculé suivant la méthode « Half height » de la transition vitreuse étant établi comme étant la température de transition vitreuse.

5. Masse de formage en polyamide ignifuge selon l'une des revendications précédentes, **caractérisée en ce qu'**au moins un polyamide aliphatique du composant (B) est composé de monomères linéaires aliphatiques, parmi lesquels on compte également des lactames.

6. Masse de formage en polyamide ignifuge selon la revendication 5, **caractérisée en ce qu'**au moins un polyamide linéaire aliphatique est choisi à partir du groupe composé de PA 6, PA 11, PA 12, PA 66, PA 69, PA 610, PA 612, PA 614, PA 618, PA 1010, PA 1012, PA 1212, PA 6/66, PA 6/12, PA 6/66/12, des polyéthéramides, des polyétherestéramides, des polyestéramides, des copolyamides de ces derniers et des mélanges de ces derniers.

7. Masse de formage en polyamide ignifuge selon la revendication 5, **caractérisée en ce qu'**au moins un polyamide linéaire aliphatique est choisi à partir du groupe composé de PA 1010 et des mélanges de PA 1010 avec au moins un autre polyamide linéaire aliphatique.

8. Masse de formage en polyamide ignifuge selon l'une des revendications précédentes, **caractérisée en ce que** l'arylphosphate est choisi à partir du groupe composé de tricrésyl phosphate, triphénylphosphate, diphénylcrésylphosphate, Bis(méthylphényl)-phénylphosphate et des mélanges de ces derniers.

9. Masse de formage en polyamide ignifuge selon l'une des revendications précédentes, **caractérisée en ce que** les autres adjuvants sont choisis à partir du groupe composé de stabilisateurs inorganiques, stabilisateurs organiques, lubrifiants, polytétrafluoréthylène, colorants, substances de marquage, pigments inorganiques, pigments organiques, absorbeurs d'IR, antistatiques, agents anti-bloquant, agents de nucléation, accélérateurs de cristallisation, retardateurs de cristallisation, additifs de conductivité, de la suie, graphite, nanotubes en carbone, agents de démoulage, agents de séparation, azurants optiques, additifs photochromes, plastifiants, agents adhésifs, agents anti-égouttement, pigments métalliques, paillettes métalliques, particules à revêtement métallique et des mélanges de ces derniers.

10. Utilisation d'une masse de formage en polyamide ignifuge selon la revendication 1, composée de :
(A) 40 à 71 % en poids de copolyamide MACMI/12 ;
(B) 20 à 51 % en poids d'au moins un polyamide aliphatique ;
(C) 6 à 20 % en poids de mélamine cyanurate ;
(D) 3 à 10 % en poids d'arylphosphate ; et
(E) 0 à 6 % en poids d'autres adjuvants ;
les composants (A) à (E) complétant à 100 % en poids la masse de formage en polyamide,
le copolyamide MACMI/12 présentant une teneur en laurinlactame de 23 à 45 % en mols par rapport à la somme molaire des monomères MACM, de l'acide isophtalique et du laurinlactame de ce copolyamide,
l'acide isophtalique dans le copolyamide MACMI/12 pouvant être remplacé en tout ou partie par de l'acide téréphtalique, et
un spécimen d'essai fabriqué à partir de cette masse de formage en polyamide présentant une dureté shore D d'au moins 77, et un essai de flambage étant réalisé et réussi avec un extrudat PA 12 recouvert de cette masse de formage par enroulement autour d'une tige métallique d'un diamètre de 12 mm, l'extrudat PA 12 pour cet essai de flambage ayant un diamètre de 1,5 mm et étant recouvert sur 0,7 mm d'épaisseur,
la dureté shore D et l'essai de flambage étant mesurés conformément aux méthodes d'essai décrites dans les exemples,
pour fabriquer un enrobage des conducteurs à fibres optiques ou un enrobage d'un câble optique au moyen d'un outil d'enrobage pour tuyaux.
